Europäisches Patentamt

European Patent Office

Office européen des brevets

(19)

(11) Veröffentlichungsnummer: **0 044 522
B1**

(12) # EUROPÄISCHE PATENTSCHRIFT

(45) Veröffentlichungstag der Patentschrift:
**24.10.84**

(51) Int. Cl.³: **B 23 F  19/10,** B 24 B  39/00, B 23 F  21/00

(21) Anmeldenummer: **81105567.2**

(22) Anmeldetag: **15.07.81**

(54) **Verfahren zum Bearbeiten der Stirnkanten von Zahnrädern.**

(30) Priorität: **18.07.80  DE 3027211**

(43) Veröffentlichungstag der Anmeldung:
**27.01.82 Patentblatt 82/4**

(45) Bekanntmachung des Hinweises auf die Patenterteilung:
**24.10.84 Patentblatt 84/43**

(84) Benannte Vertragsstaaten:
**DE**

(56) Entgegenhaltungen:
**DE - A - 1 527 109
DE - A - 2 406 325
DE - A - 2 509 314
FR - A - 2 461 550
GB - A - 1 382 848
US - A - 3 273 366**

(73) Patentinhaber: **ZAHNRADFABRIK FRIEDRICHSHAFEN AKTIENGESELLSCHAFT, Löwentaler Strasse 100 Postfach 2520,
D-7990 Friedrichshafen 1 (DE)**

(72) Erfinder: **Sommer, Rudolf, Narzissenweg 8,
D-7070 Schwäbisch Gmünd (DE)**

## Beschreibung

Die Erfindung betrifft ein Verfahren zum gleichzeitigen Bearbeiten von Kanten eines Zahnrades nach dem Oberbegriff des Anspruchs.

Ein solches Verfahren ist bereits durch die GB-PS 13 82 848 (DE-A-2 226 111) bekannt, durch welches die Kopfkanten eines Zahnrades mittels in Achsrichtung bewegter und auf einem Kreisdurchmesser entsprechend der Zähnezahl angeordneter Kugeln in einem Walzvorgang gebrochen werden. Dieses Verfahren ist auf das Abschrägen der Kopfkanten beschränkt.

Ein besonderes Problem bei hochbelasteten Zahnrädern besteht jedoch darin, dass die Zähne, vor allem im Bereich der Zahnfussrundungen, bruchgefährdet sind. Der Bruch beginnt bei geradverzahnten Rädern meist am Zahnende der «Zugflanke». Bei schrägverzahnten Rädern ist das Zahnende der einen spitzen Winkel mit der planen Stirnfläche des Rades bildenden Zahnflanke gegen Anrisse und damit gegen Bruch gefährdet.

Durch die Erfindung soll bei Zahnrädern die Oberfläche und die Festigkeit im Bereich der Zahnfussrundung mit möglichst geringem Aufwand verbessert werden. Die Empfindlichkeit gegen das Auftreten von Zahnfussrissen soll verringert werden. Zur Lösung dieser Aufgabe werden die im Kennzeichen des Anspruches angeführten Merkmale vorgeschlagen.

Durch das Eindrücken von z.B. Stahl- oder Hartmetallkugeln in die Zahnfussrundungen wird eine glatte, riefenfreie Oberfläche bei zusätzlicher Materialverdichtung erzielt. Der Zahnfuss erfährt daher in dem für Anrisse besonders empfindlichen Bereich eine erhöhte Festigkeit. Hinzu kommt der Vorteil, dass der Arbeitszeitaufwand einen Bruchteil der Zeit beträgt, die für eine vergleichbare, spanabhebende Bearbeitung erforderlich ist. Der die verschleissfesten Körper tragende Stahlring ist sehr einfach gestaltet und verursacht geringe Werkzeugkosten. Die Erfindung ist anwendbar bei gerad- und schrägverzahnten Stirnrädern, bei Rädern mit kegeliger Geradverzahnung und bei Kegelrädern.

Es ist zwar bereits aus der US-PS 32 73 366 eine Einrichtung zum Fertigbearbeiten von grossen Kettenrädern bekannt. Dabei rotiert das erwärmte Kettenrad gegen ein der Kette entsprechendes Rollrad. Das Kettenrad erhält dabei die für den präzisen Ketteneingriff notwendige Formgebung an den Tragflanken und an den Stirnseiten. Hierbei handelt es sich um einen Walzvorgang, der durch eine radiale Zustellbewegung des Rollrades vorgenommen wird. Das mit dieser bekannten Einrichtung durchführbare Verfahren erfordert eine lange Bearbeitungszeit mit einer sehr aufwendigen Maschine. Eine getrennte Bearbeitung der Zahnfussrundungen ist hierbei nicht möglich.

Die Erfindung ist nachfolgend anhand eines Ausführungsbeispieles näher erläutert.

Es zeigen:

Fig. 1 das Prägewerkzeug nach der Erfindung.

Fig. 2 stark vergrössert eine teilweise Ansicht eines Zahnrades mit nach der Erfindung geprägten Zahnfussrundungen.

Fig. 3 einen Schnitt nach der Linie III–III in Fig. 2.

Fig. 4 eine weitere Ausführungsform für das Prägewerkzeug.

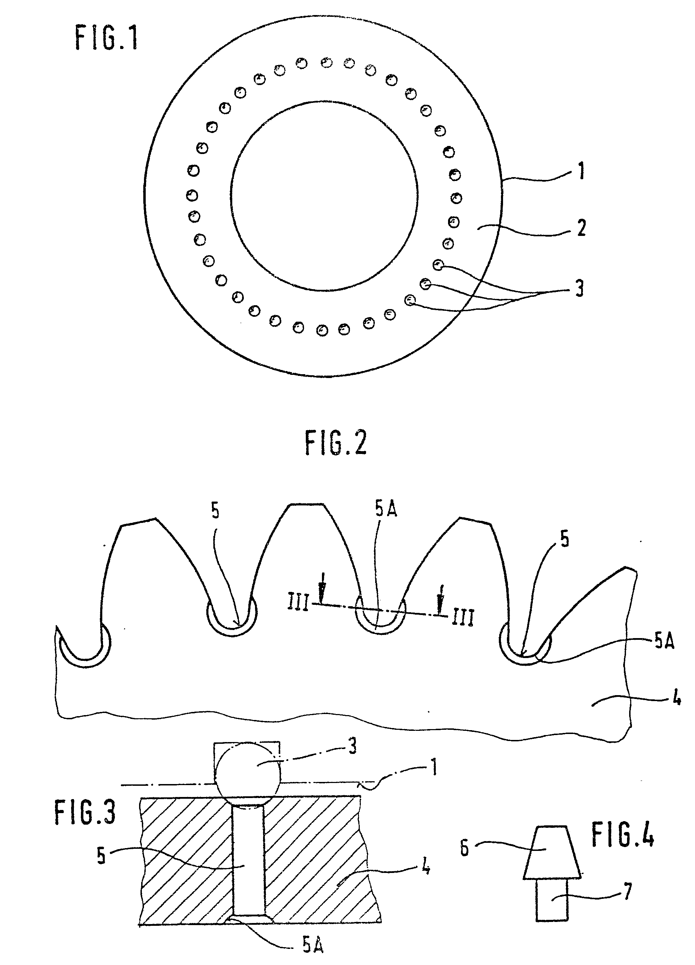

Gemäss Fig. 1 ist ein hochfester Stahlring 1 an seiner Planfläche 2 mit einer der Werkstückzähnezahl entsprechenden Anzahl von Stahl- oder Hartmetallkugeln 3 bestückt. Dieser Stahlring 1 ist an einem Pressenstempel befestigt und radial grob auf eine Werkstückverzahnung vorzentriert. Eine geringe Drehbeweglichkeit gegenüber einem Pressenstempel bewirkt die Restzentrierung. Beim Arbeitshub des Pressenstempels auf ein Werkstück 4 (Fig. 2 und 3) erzeugen die leicht erhaben in den Stahlring 1 eingelassenen Kugeln 3 im Bereich der Zahnfussrundungen 5 durch Materialverdrängung Einprägungen 5A. Diese Einprägungen 5A stimmen mit der Kugelform überein. Im Bedarfsfalle kann bei Zahnrädern mit gleicher Zahnfussrundung an der gegenüberliegenden Stirnseite ein ebensolcher Stahlring angelegt werden. Somit können beide Stirnseiten des Zahnrades in einem Pressenhub bearbeitet werden. Die Grösse der Kugeln richtet sich nach dem Durchmesser einer Kugelzone, die den Zahn-Stirnschnitt am Fusskreisdurchmesser und an den Orten höchster Biegespannung (= 30°-Tangenten, DIN 3990) berührt, multipliziert mit Wurzel 2. Die Kugel-Aufnahmebohrungen sind mit Untermass gebohrt, so dass keine zusätzliche Kugelbefestigung erforderlich ist.

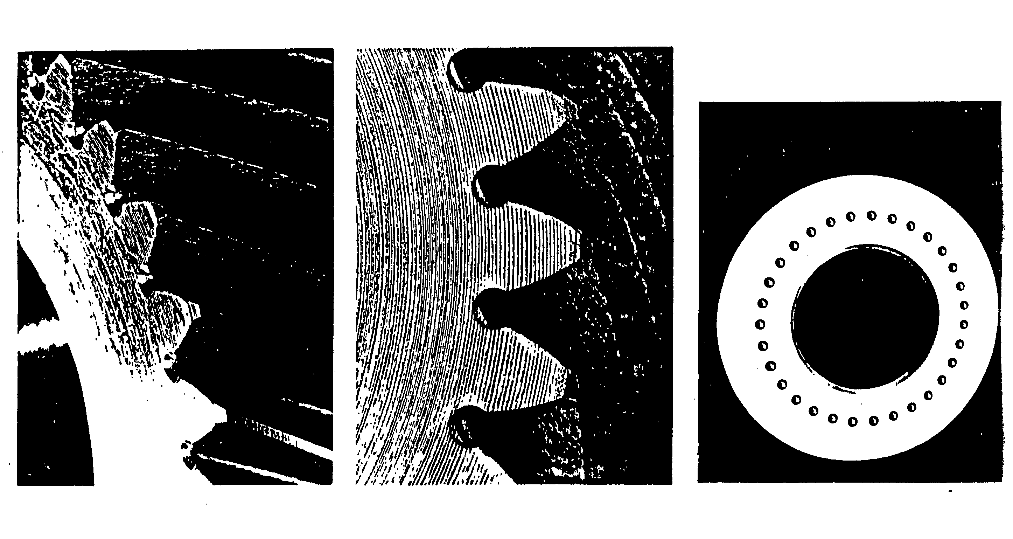

Bei geradverzahnten Stirn- oder Kegelrädern können anstelle der Kugeln 2 auch kegelige Stifte 6 (Fig. 4) oder Stifte mit Sonderformen verwendet werden. In diesem Falle werden die Stifte 6 mit ihrem Schaft 7 in Bohrungen des Stahlringes 1 eingepresst.

Es ist z.B. auch möglich, anstelle der Stahl- oder Hartmetallkörper Einsätze aus keramischem Werkstoff zu verwenden.

## Patentanspruch

1. Verfahren zum gleichzeitigen Bearbeiten von Kanten eines Zahnrades (4) mittels in Achsrichtung bewegter, auf einem Kreisdurchmesser entsprechend der Zähnezahl angeordneter Prägekörper (3), dadurch gekennzeichnet, dass die Prägekörper (3) auf einer Planfläche (2) eines Stahlringes (1) durch die axiale Zustellbewegung nur in die Zahnfussrundungen (5) des Werkstückes (4) derart gedrückt werden, dass im Stirnbereich der Zahnfussrundungen (5) Einprägungen (5A) entstehen.

## Revendication

Procédé d'usinage simultané des arêtes d'un engrenage (4) par déplacement axial de poinçons d'estampage (3) disposés sur une circonférence en fonction du nombre de dents, caractérisé par le fait que les poinçons d'estampage (3) placés sur la surface (2) d'un disque d'acier (1) sont pressés seulement dans les arrondis de pieds de dents (5) de l'engrenage (4) du fait du déplacement axial, de telle sorte que des empreintes (5A) se produisent sur la face frontale des arrondis de pieds de dents (5).

**Claim**

Method for simultaneous processing of edges of a gear (4) by means of embossing elements (3) equal in number to the number of teeth, moved in an axial direction and arranged in a circle, characterized in that the embossing elements (3) being arranged on a plane face (2) of a steel ring (1) are pressed in such a way by an axial feed motion towards the tooth roots (5) of the gear (4) so that embossing marks (5A) are produced along the tooth root edges.

FIG.1

FIG.2

FIG.3

FIG.4